# EUROPEAN PATENT SPECIFICATION

(11) **EP 1 893 404 B1**
(45) Date of publication and mention of the grant of the patent: **04.10.2017**
(21) Application number: 06764501.0
(22) Date of filing: 15.06.2006
(51) Int. Cl.: B32B 13/14, E04B 1/94

(54) **FIRE PROTECTION ELEMENT, PROCESS FOR MANUFACTURING THEREOF AND USE THEREOF**
FEUERSCHUTZELEMENT, HERSTELLUNGSVERFAHREN DAFÜR UND ANWENDUNG DAVON
ELEMENT DE PROTECTION CONTRE L'INCENDIE, PROCEDES DE FABRICATION DE CE DERNIER ET UTILISATION DE CE DERNIER

(30) Priority: 17.06.2005 FI 20055327
(43) Date of publication of application: 05.03.2008
(73) Proprietor: Paroc Group Oy, 00180 Helsinki (FI)
(72) Inventor: FELLMAN, Jacob, FI-21600 Pargas (FI); RANTANEN, Beatrice, FI-21600 Pargas (FI); KOTWAS, Robert, PL-05-126 Nieporet (PL)
(74) Representative: LEITZINGER OY
(86) International application number: PCT/FI2006/050262
(87) International publication number: WO 2006/134236

(56) References cited:
- EP-A- 1 097 807
- EP-A- 1 347 144
- GB-A- 2 022 503
- US-A1- 2002 187 296
- US-A1- 2003 175 478

## Description

This invention relates to a process for manufacturing a fire protection element having a layer structure, which element comprises at least two mineral wool layers in the form of slabs between which is arranged at least one inorganic material layer, which liberates water or carbon dioxide under the influence of heat, or which in some other way has a fire retarding effect.

It is previously known to use mineral wool in fire protection slabs. The reason for this are the good fire protection properties of the mineral wool itself. It is also known to e.g. between two layers of mineral wool such as stone wool arrange an inorganic material layer, consisting of a dehydrating hydroxide as a fire retardant in combination with a binder, which is to bind the mineral wool slabs together. Such solutions are described for example in prior art in publications EP 1239093 A2, EP 0741003 B1, EP 0485867 B1 and EP 0353540 B2.

In EP 1239093 A2 is presented a fire protection element, essentially consisting of two mineral wool layers preferably stone wool layers as well as at least one intermediate layer consisting of a gypsum plate, which by way of glue is fixed between the mineral wool layers.

In EP 0741003 B1 is described on the other hand the use of one or several intermediate layers comprising an inorganic material in the form of a semi-finished product which may be manufactured by applying the inorganic material in viscous form on a glass fabric, or between two glass fabrics, in order to then be processed into a plate before it is arranged between the mineral wool layers. The inorganic layer may consist of a mixture of a water liberating hydroxide, such as aluminium hydroxide, and a binder comprising water glass, silica sol or magnesium.

In EP 0353540 B2 is presented a mainly inorganic layer between mineral wool slabs which comprises a water liberating hydroxide other than kaoline and a binder such that the hydroxide is added in at least two fractions having different grain size. As a binder is mentioned silica sol or dissolved water glass. In EP 0485867 B1 is on the other hand described the use of an exothermically curing magnesium binder and a dehydrating hydroxide such as aluminium hydroxide in the inorganic layer between the mineral wool slabs. US2002/187296 discloses a method for the production of gypsum board comprising the steps of applying a gypsum slurry to a sheet of inorganic fibres, causing the slurry to penetrate the fibres, adding second and third layers of gypsum slurry of differing consistencies, adding a second layer of inorganic fibres, causing the third slurry to penetrate the second fibre layer, and then consolidating the entire structure. These known solutions are as such working, but common for them all is that the manufacturing process comprises unnecessarily many and costly non automatic steps such as manufacturing and gluing of plates of inorganic fire retardant between the mineral wool slabs or the need of supplied drying energy for the purpose of forming a solid inorganic fire retarding layer between the mineral wool slabs.

However, the inventors of this invention have now found a seemingly astonishingly simple solution to the problems mentioned above. The fact that nobody despite a not totally negligible amount of patents/patent applications within this field has come up with this solution is however a proof for that the solution has not been obvious to the person skilled in the art.

The purpose of this invention is thereby to provide a process for manufacturing a fire protection element, whereby the above stated problems in the prior art can be avoided.

For accomplishing this, the process according to the invention is characterised by the following steps:
a) at least one of two mineral wool slabs which are to be attached to each other is coated on one side with an inorganic fire retardant in the form of an aqueous suspension or paste, whereafter
b) the mineral wool slabs are pressed against each other, so that a layer of the inorganic fire retardant is formed between them, whereby the mineral wool slabs are glued together by the inorganic fire retardant upon its drying.

The fire retardant according to the invention is gypsum, which is applied in the form of an aqueous paste, having suitable binding and fire protection properties. As fire retardant may also be used water glass according to the above. Also other fire retardants such as aluminium, or magnesium hydroxide, calcium or magnesium carbonate with a small addition e.g. 0-5 % of an organic binder may be used.

The mineral wool slabs are of the same thickness if the manufacturing is performed continuously in the line production, but the same principle may also be used after the line production and then they may also be of different thickness.

In an especially preferable embodiment the process according to the invention in continuous line production is characterised by first coating the cured mineral wool mat with a paste of gypsum, or alternatively with a paste of water glass, and then dividing the mineral wool mat in equally sized parts, which thereafter are piled on top of each other in such a manner that the uppermost part is simultaneously turned 180° so that the gypsum layer is positioned between the mineral wool. This gypsum layer will therefore become twice as thick as the coating. The number of gypsum layers in the final product will be one less than the number of parts which the mineral wool mat is divided into. The uppermost layer which is twice as thick as the others if several layers are made is therefore a more effective fire protection. The slab is installed in constructions so that this layer is placed so that it will be closest to that side which is intended to be protected against high temperatures at the occasion of a fire (as far as possible from the fire). Then the effect of this layer will be used to its maximum, without the gypsum being on the outside.

Preferably the gypsum-coated mineral wool mat is divided into at least two, still more preferably into three equally sized parts with respect to the length and/or width, preferably the length and the width. Since the gypsum as such works as a binder (is applied in paste form) it may dry by itself at room temperature without any supplied drying energy and without any addition of any additional binders. This may take place for instance in a warehouse and/or in the packaging. This means that the production process becomes faster as well as cheaper in expenses, since the product does not need to be dried in a separate drying step. A small amount of binder (0 - 5 %, preferably < 2 %) may of course be added if higher requirements on tensile strength are needed. The mineral wool which is used in this invention is preferably stone wool but also other types of mineral wool such as slag wool or glass wool can be used.

Since in this invention gypsum is used as fire retardant, this means that using this invention one obtains an improved fire protection at lower temperatures than with other generally used fire retardants such as aluminium, or magnesium hydroxide, calcium or magnesium carbonate and the like. With gypsum the water liberation occurs already at just above 100 °C. Manufacturing a fire protection slab containing gypsum requires that the gypsum is added after the curing of the mineral wool mat, since the curing temperature normally is about 200 °C. Gypsum has therefore according to prior art been added in after-treatment, and one problem has been to get the gypsum integrated into the mineral wool. With the present invention even this problem may now be avoided.

The gypsum used for carrying out the invention may for example be untreated waste gypsum, possibly containing a small addition of glue (0 - 5 %, preferably 2 %) if so desired, which means less stress on the environment and lower raw material costs.

With the purpose of avoiding the problems in prior art, which have been presented above, the fire protection element according to the invention is characterised by that the fire protection element essentially consists of mineral wool slabs glued together by means of intermediate layers of an inorganic fire retardant.

By using the present invention a simpler, cheaper and shorter manufacturing process for producing fire protection elements of mineral wool is therefore obtained, but first and foremost the process according to the invention enables production of thinner fire protection elements with an unchanged fire classification e.g. for HPAC-installations.

The benefit of having the fire protection material in two layers and the mineral wool in three layers is shown in the subsequent diagrams 1 and 2 where one test without, three with one layer in different positions, and one with two layers are compared. The position of the layer also has a significance.

In the following the invention is described in more detail by means of the following drawings and examples which by no manner of means should be interpreted in such a way that they could limit the scope defined by the claims.

### List of drawings:

- Figure 1a: is a perspective of a mineral wool slab coated with an inorganic layer prior to dividing into several equally sized parts for gluing together of the parts,
- Figure 1b: is a perspective of a fire element prepared by the process according to the invention consisting of two mineral wool slabs glued together by means of one inorganic layer,
- Figure 2: is a perspective of a fire element prepared by the process according to the invention consisting of three mineral wool slabs glued together by means of two inorganic layers,
- Figure 3: is a schematic picture of the dividing of the mineral wool mat into parts according to the process of the invention
- Figure 4: is a graph where the fire protection's length in minutes for an intermediate layer being made of different materials are compared with each other
- Figure 5: is a graph where the fire protection's length in minutes for one or two intermediate layers of gypsum and different positions of the layers are compared.

Example 1. Automated manufacturing of a fire protection element 1 having a mineral wool/gypsum/mineral wool structure is performed on an automatic production line according to the following:
a) one side of an already cured mineral wool slab or mat 2 e.g. having width and length dimensions of 600x2400 mm and a thickness of about 20 mm, which mat's 2 edges have been cut off, is coated with an about 0.5 mm thick layer 3 of a water based suspension or paste of gypsum, which possibly contains a.small amount (0 - 5 %) of glue (e.g. any organic glue typical for the person skilled in the art), preferably < 2 %,
b) the coated mineral wool mat 2 is cut on the production line in lengthwise direction so that two equally sized slabs are formed, whereafter
c) the mineral wool slabs 2a and 2b are pressed against each other, so that a "double" gypsum layer 3 is formed between them, whereby the mineral wool slabs 2a and 2b are glued together by the gypsum when it dries. When the gypsum has dried is in other words obtained a fire protection element having the dimensions 600x1200 mm and a thickness of about 41 mm. Steps a, b, and c are preferably performed directly on the line directly after the curing oven and the cooling. The cooling which normally is needed is adjusted so that mineral wool has an appropriate temperature for drying of the "double" layer 3 of gypsum paste without deterioration of the gluing effect. The cutting of the mineral wool slab 2 and the turning of the slabs 2a and 2b is performed automatically.

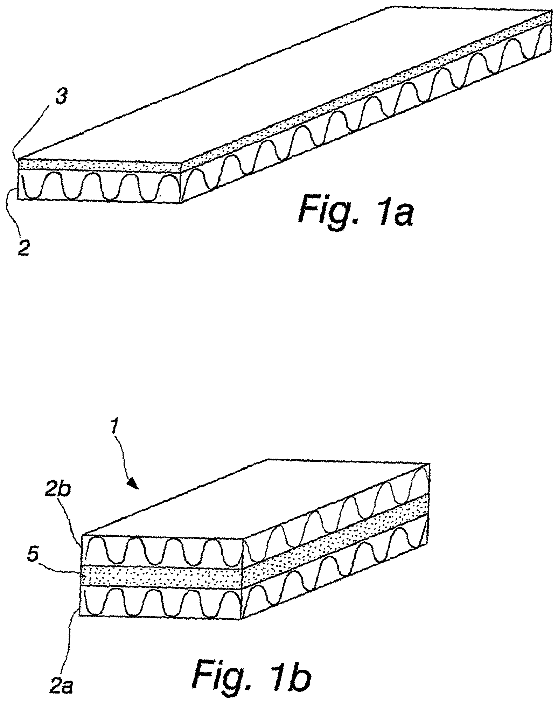

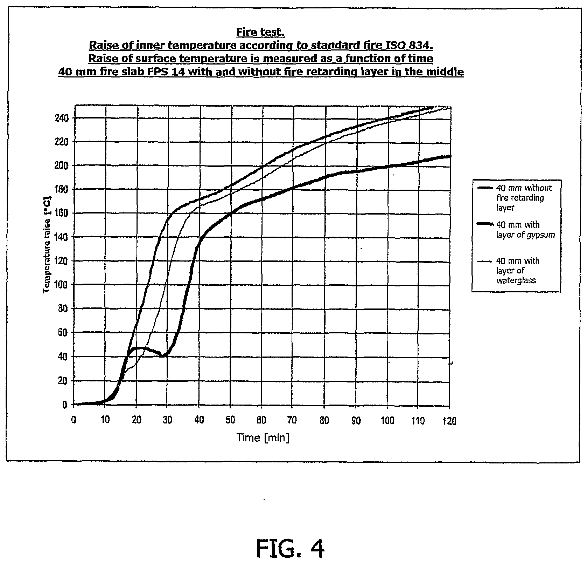

In figure 4 is shown the results from tests which simulate fire, which follows the fire curve in EN 1363-1, in a ventilation channel where the mineral wool is on the outside of a channel made of sheet metal and the fire occurs inside the channel. In figure 4 the time dependent temperature rise, in other words the fire retarding effect, of a fire protection element 1 manufactured according to example 1 is compared with an element having the same dimensions on the mineral wool slabs but lacking intermediate inorganic layers and an element having the same dimensions but where the inorganic layer consists of water glass. Figure 1 shows that the most fire retarding element of these three is the element having gypsum according to example 1.

The time which the fire sheet protects is prolonged significantly if the fire protection slabs has a layer comprising gypsum in the middle. The time until the allowable temperature rise of 140 °C is reached is prolonged from 25 minutes to 40 minutes in the presence of a layer of gypsum and to 33 minutes in the presence of a layer of water glass.

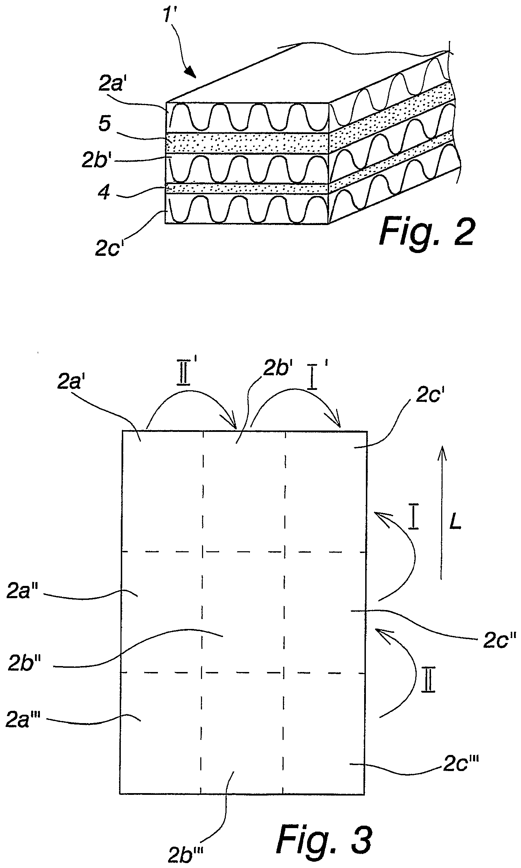

Example 2. Automatised manufacturing of a fire protection element 1' having a mineral wool/gypsum/mineral wool/gypsum/mineral wool structure is performed on a automatic production line according to the following:
a) one side of an already cured mineral wool slab or mat 2 e.g. having width and length dimensions of 1800x2700 mm and a thickness of about 20 mm, which mat's 2 edges have been cut off, is coated with an about 1 mm thick layer of a water based suspension or paste of gypsum, which preferably contains a small amount (0 - 5 %) of glue (e.g. some organic glue typically used by the person skilled in the art), preferably < 2 %,
b) the mineral wool slab 2 is cut on the production line in lengthwise and crosswise direction so that three equally sized adjacent (in other words parallel sidewards with respect of the line, see figure 3) slabs 2a', 2b' and 2c' (and 2a", 2b" and 2c" as well as 2a"', 2b'" and 2c"') having the width and length dimensions of 600x900 mm, whereafter
c) the mineral wool slabs 2a', 2b' and 2c' are pressed against each other so that two gypsum layers 4 and 5 are formed between them, whereby the mineral wool slabs are glued together when the gypsum dries up. Hence, according to example 2 one obtains three fire protection elements 1' having the width and length dimensions of 600x900 mm and a thickness of about 63 mm.

Thus, here the automatised placement and gluing together of the slabs 2a', 2b' and 2c' (and 2a", 2b" and 2c" as well as 2a"', 2b'' and 2c") against each other in parallel direction, in other words in crosswise direction with respect to the line direction L itself so that each slab is lifted and pressed against the gypsum layer of the underlying and previous slab, with the exception of the last slab 2a' (or 2a" or 2a'") which is lifted and turned 180° and pressed with its gypsum layer 3 against the gypsum layer 3 of the underlying previous slab 2b' (or 2b" or 2b'").

Alternatively, the slabs in step c) in example 2 (also in example 1) may be placed on top of each other in series i.e. so that a slab, which in the line direction successively follows the previous slab in the line direction is placed on top of and pressed against it. This alternative, as well as the placement in step c) is illustrated in figure 3, where the mineral wool mat is sawed (dashed lines) in three equally sized parts both with respect of the width and length of the mat i.e. so that the mat is divided into nine equally sized parts i.e. the slabs 2a', 2b', 2c', 2a", 2b", 2c", 2a"', 2b"' and 2c"'. If parallel slabs (e.g. 2a', 2b', 2c' or 2a", 2b", 2c") are placed on top of each other sidewise, slab 2b' is first lifted up according to arrow I' in order to then be pressed against the underlying slab 2c' (2b' and 2c' both have the gypsum layer pointing upwards) and then slab 2a' is lifted and turned 180° and placed according to arrow II' on top of slab 2b' so that the gypsum layer of slab 2a' becomes positioned against the gypsum layer of sheet 2b'.

If the gluing together of the slabs is performed in the line direction L, the placement of the slabs on top of each other occurs according to the arrows I and II. This means in other words that the slab 2c" is lifted and pressed against the gypsum layer of the underlying slab 2c' whereafter slab 2c"' is lifted and turned 180° and pressed with its gypsum layer against the gypsum layer of the underlying slab 2c". The gluing together of 2b' with 2b" and 2c"' as well as 2a' with 2a" and 2a'" is performed in the same way.

Steps a, b and c are preferably performed directly on the line directly after the curing oven and the cooling. The cooling which normally is needed is adjusted so that the mineral wool has an appropriate temperature for drying of the layers 4 and 5 of gypsum paste without deterioration of the gluing effect. Cutting and turning of the slabs is performed automatically. In this type of elements one gypsum layer 4 will be single and the other one 5 "double", i.e. approximately double in thickness as compared to the single layer.

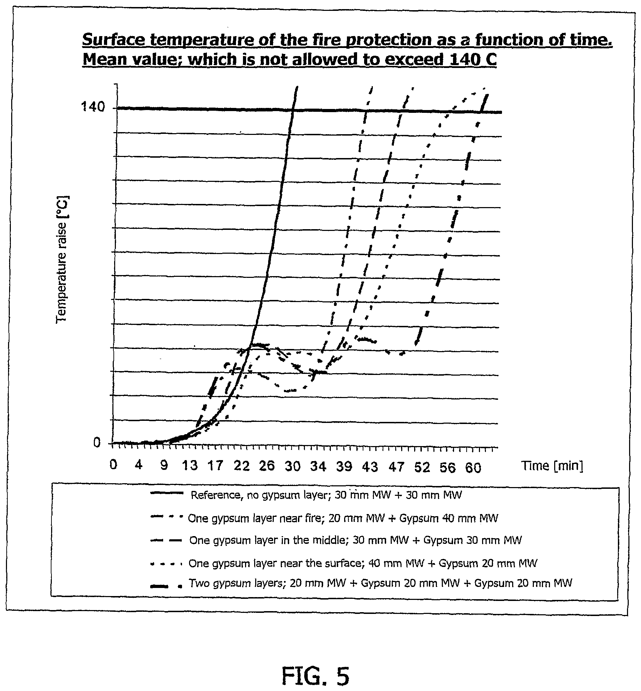

In figure 5 is presented a simulated fire where the fire occurs outside the insulated channel and the temperature is measured inside the channel (on the metal surface). In figure 5 is shown the time dependent temperature rise, i.e. the fire retarding effect, of a fire protection element 1' having two gypsum layers 4 and 5 as well as three mineral wool layers 2a', 2b' and 2c' (three Paroc FPS 14 slabs having a thickness of 20 mm each and between these two gypsum layers 4 and 5) gives the best fire retarding effect (it takes about 60 minutes before the temperature rises up to 140 °C) in comparison with the fire protection element 1 having only one gypsum layer 3.

The positioning of the gypsum layers and the number of them affects the time of protection. More than a doubling is achieved when using double gypsum layers.

NB. Figures 4 and 5 describe two different constructions and are therefore not directly comparable with each other.

The thickness of the gypsum layer can be limited to that amount which is needed for gluing the slabs together preferably 1- 5 kg/m² which gives the double amount/thickness in the finish product there where one gypsum layer is positioned against another.

## Claims

1. Process for manufacturing a fire protection element (1 or 1') having a layer structure, which element comprises at least two mineral wool layers in the form of slabs (2a, 2b) between which is arranged at least one inorganic material layer (3), which liberates water under the influence of heat, **characterised in that** a cured mineral wool mat (2) is coated with an inorganic material layer (3), which essentially consists of paste of gypsum, and that the mat (2) thereafter is divided into slabs, which thereby constitute said mineral wool slabs (2a, 2b), whereafter these slabs on the manufacturing line automatedly are placed on top of each other so that gypsum layers are formed between the mineral wool slabs and that these gypsum layers thereafter are allowed to dry up by themselves whereby the sheets are glued together.

2. Process according to claim 1, **characterised in that** said mineral wool mat (2), coated with a gypsum layer (3), with respect to the length and/or width automatedly is divided into at least two equally sized sheets (2a, 2b), preferably into three equally sized sheets (2a', 2b', 2c') on the line, and that the slabs thereupon automatedly are placed on top of each other on the line so that the applied gypsum layer (3) of each slab is applied against the uncoated surface of the following slab, preferably with the exception that the uppermost or last slab (2b, 2a"', 2b"', 2c"') in an element is placed with its applied gypsum layer (3) against the applied gypsum layer (3) of the second last slab (2a, 2a", 2b", 2c").

3. Process according to claim 2, **characterised in that** the placement of said slabs against each other takes place in the direction of the line and/or in cross direction of the line.

4. Process according to any of the claims 1-3, **characterised in that** the drying of the gypsum paste is allowed to happen by itself at room temperature.

5. Process according to any of the claims 1-4, **characterised in that** the mineral wool used is stone wool.

6. Process according to any one of the claims 1-5, **characterised in that** the fire protection elements (1 or 1') after compression against each other for the purpose of gluing together immediately can be packaged.

7. Process according to any one of the claims 1-6, **characterised in that** the gypsum used essentially is constituted of untreated waste gypsum.

## Patentansprüche

1. Verfahren zur Herstellung eines Feuerschutzelements (1 oder 1'), das eine Schichtstruktur aufweist, wobei das Element wenigstens zwei Mineralwolleschichten in Form von Tafeln (2a, 2b) aufweist, zwischen denen wenigstens eine anorganische Materialschicht (3) angeordnet ist, die unter dem Einfluss von Wärme Wasser freigibt, **dadurch gekennzeichnet, dass** eine ausgehärtete Mineralwollematte (2) mit einer anorganischen Materialschicht (3) beschichtet wird, die im Wesentlichen aus Gipspaste besteht, und dass die Matte (2) danach in Tafeln aufgeteilt wird, die dadurch die Mineralwolletafeln (2a, 2b) bilden, wobei diese Tafeln auf dem Herstellungsstrang anschließend automatisch übereinander angeordnet werden, so dass zwischen den Mineralwolletafeln Gipsschichten gebildet werden, und dass diesen Gipsschichten danach gestattet wird, von selbst zu trocknen, so dass die Platten dadurch miteinander verklebt werden.

2. Verfahren nach Anspruch 1, **dadurch gekennzeichnet, dass** die Mineralwollematte (2), die mit einer Gipsschicht (3) beschichtet wird, in Bezug auf die Länge und/oder Breite auf dem Strang automatisch in mindestens zwei übereinstimmend bemessene Platten (2a, 2b), vorzugsweise in drei übereinstimmend bemessene Platten (2a', 2b', 2c') aufgeteilt wird, und dass die Tafeln anschließend auf dem Strang automatisch übereinander angeordnet werden, so dass die aufgetragene Gipsschicht (3) jeder Tafel gegen die unbeschichtete Oberfläche der folgenden Tafel aufgetragen wird, vorzugsweise mit der Ausnahme, dass die oberste oder letzte Tafel (2b, 2a'", 2b''', 2c"') in einem Element mit ihrer aufgetragenen Gipsschicht (3) gegen die aufgetragene Gipsschicht (3) der vorletzten Tafel (2a, 2a", 2b", 2c") angeordnet wird.

3. Verfahren nach Anspruch 2, **dadurch gekennzeichnet, dass** die Platzierung der Tafeln gegeneinander in Richtung des Strangs und/oder quer zu der Richtung des Strangs stattfindet.

4. Verfahren nach einem beliebigen der Ansprüche 1-3, **dadurch gekennzeichnet, dass** der Gipspaste gestattet ist, bei Raumtemperatur von selbst zu trocknen.

5. Verfahren nach einem beliebigen der Ansprüche 1-4, **dadurch gekennzeichnet, dass** die verwendete Mineralwolle Steinwolle ist.

6. Verfahren nach einem beliebigen der Ansprüche 1-5, **dadurch gekennzeichnet, dass** die Feuerschutzelemente (1 oder 1'), nachdem sie gegeneinander gedrückt wurden, um sie miteinander zu verkleben, sofort gebündelt werden können.

7. Verfahren nach einem beliebigen der Ansprüche 1-6, **dadurch gekennzeichnet, dass** der verwendete Gips im Wesentlichen auf einem unbehandelten Abfallprodukt basiert.

## Revendications

1. Procédé de fabrication d'un élément de protection contre l'incendie (1 ou 1') comportant une structure stratifiée, ledit élément comprenant au moins deux couches de laine minérale sous forme de dalles (2a, 2b) entre lesquelles est disposée au moins une couche de matériau inorganique (3) libérant de l'eau sous l'influence de la chaleur, **caractérisé en ce qu'**un tapis de laine minérale durcie (2) est revêtu avec une couche de matériau inorganique (3) consistant essentiellement en une pâte de plâtre, et **en ce que** le tapis (2) est ensuite divisé en dalles, lesquelles constituent ainsi lesdites dalles de laine minérale (2a, 2b), après quoi ces dalles sur la chaîne de fabrication sont automatiquement placées les unes sur les autres, de telle façon que les couches de plâtre sont formées entre les dalles de laine minérale, et **en ce que** ces couches de plâtre peuvent ensuite sécher toutes seules, moyennant quoi les plaques sont collées ensemble.

2. Procédé selon la revendication 1, **caractérisé en ce que** ledit tapis de laine minérale (2) revêtu avec une couche de plâtre (3), par rapport à la longueur et/ou à la largeur, est automatiquement divisé en au moins deux plaques de taille égale (2a, 2b), de préférence en trois plaques de taille égale (2a', 2b', 2c') dans la chaîne, et **en ce que** les dalles sont ensuite automatiquement placées les unes sur les autres dans la chaîne, de telle façon que la couche de plâtre (3) appliquée de chaque dalle est appliquée contre la surface non-revêtue de la dalle suivante, de préférence à l'exception du fait que la dalle supérieure ou finale (2b, 2a"', 2b"', 2c"') dans un élément est placée avec sa couche de plâtre (3) appliquée contre la couche de plâtre (3) appliquée de la deuxième dalle finale (2a, 2a", 2b", 2c").

3. Procédé selon la revendication 2, **caractérisé en ce que** l'agencement desdites dalles les unes contre les autres est réalisé dans la direction de la chaîne et/ou dans une direction transversale de la chaîne.

4. Procédé selon l'une quelconque des revendications 1 à 3, **caractérisé en ce que** le séchage de la pâte de plâtre peut se faire tout seul à température ambiante.

5. Procédé selon l'une quelconque des revendications 1 à 4, **caractérisé en ce que** la laine minérale utilisée est une laine de roche.

6. Procédé selon l'une quelconque des revendications 1 à 5, **caractérisé en ce que** les éléments de protection contre l'incendie (1 ou 1') après compression les uns contre les autres pour être collés les uns aux autres peuvent être conditionnés immédiatement.

7. Procédé selon l'une quelconque des revendications 1 à 6, **caractérisé en ce que** le plâtre utilisé est essentiellement constitué de déchets de plâtre non traités.
